# EUROPEAN PATENT SPECIFICATION

(11) **EP 0 587 211 B1**
(45) Date of publication and mention of the grant of the patent: **09.02.2000**
(21) Application number: 93202344.3
(22) Date of filing: 09.08.1993
(51) Int. Cl.: H04Q 7/30, H04B 7/26, G06F 13/366

(54) **A radio communication system and a radio base station for use in such a system.**
Funkübertragungssystem und Funkbasisstation zur Verwendung in einem derartigen System
Système de radiotransmission et station de base destinée à être utilisée dans un tel système

(30) Priority: 10.08.1992 EP 92202456
(43) Date of publication of application: 16.03.1994
(73) Proprietor: LUCENT TECHNOLOGIES INC., Murray Hill, New Jersey 07974-0636 (US)
(72) Inventor: De Freese, Karsten, c/o Int. Octrooibureau B.V., NL-5656 AA Eindhoven (NL); Brückel, Rudolf, c/o Int. Octrooibureau B.V., NL-5656 AA Eindhoven (NL)
(74) Representative: Buckley, Christopher Simon Thirsk

(56) References cited:
- EP-A- 0 278 264
- EP-A- 0 439 926

## Description

The present invention relates to a radio communication system comprising at least one radio base station for communicating with a plurality of mobile radio stations, the base station comprising control and signal processing means.

The present invention further relates to a radio base station for use in a cellular radio communication system, which base station comprises control and signal processing means.

A radio communication system and a radio base station of this kind are known from the article, "GSM Base Station Development", P. Reljonen, Telecommunications, Sep. 1990, pp. 85-92. In this article GSM-Base Systems are described, consisting of a number of cells with one Base Transceiver Station (BTS) in each cell, each BTS containing a number of radio carriers (TRX). By using timedivision techniques, each carrier is capable of serving eight physical channels. In GSM, the frequency band used is 935-960 MHz (TX) and 890-915 MHz (Rx). The total number of different carriers then becomes 124, given the carrier separation of 200 kHz. The Base System communicates with Mobile Radio Stations roaming in the cells. BTS intelligence is partly centralized towards the switching element. The Base Station Controller (BSC), as part of the Base Station System, manages and maps both radio and terrestrial channels and executes handovers. Functions included in the BTS are channel encoding and decoding (CHC), interleaving, encryption, TDMA frame building, modulation and demodulation, RF transceiving, and RF antenna diversity reception. In a physical realisation a radio base station rack may comprise twelve Radio Terminals, in two rack mounting frames containing three double Radio Terminals, each, i.e. 96 channels are provided then, on one site. Such a rack further may comprise antenna coupling equipment, a rack interface and power supply units. For carrying out said functions in the BTS, the Radio Terminals comprise control and signal processing means, not being disclosed in detail in said article. In order to meet real time requirements for various control and signal processing functions, such as channel encoding and decoding etc., the radio terminals usually comprise a number of processors for various tasks.

The European patent specification 0 439 926 discloses a radio communication system with a radio base station for communication with multiple mobile radio stations and comprising control and signal processing means, wherein said control and signal processing means include master and slave units for carrying out master and slave control and signal processing functions, and wherein the base station comprises an internal bus coupled to the master and slave units, and further an arbiter unit coupled to the internal bus for arbitrating access to the internal bus by the masters and the slaves.

However the disadvantage of such a radio communication system is that the master cannot change to another master or to a slave unit presently having a request.

It is an object of the present invention to provide a radio communication system in which control and signal processors share an internal bus between masters and to further submit requests from slaves to masters. The present invention provides a radio communication system and a corresponding radio base station according to the features of respective claims 1 and 9.

To this end a radio communication system according to the present invention is characterised in that master units and slave units can be requesters, and master units are assignable to requesters, and by an arbiter unit coupled to the internal bus for arbitrating access to the internal bus by the master units and the slave units and for examining requesters for having pending requests, for activating a master unit assigned to the requester having the pending request and for servicing the request.

It is achieved that the processors, all potentially being master, can access any slave, e.g. a channel encoding and decoding unit or channnel codec, or any other processor randomly. It is also achieved that the system can be extended with further masters or slaves easily, simply by adding these masters and slaves to the internal bus and by modifying the control software slightly.

It is to be mentioned that systems for resolving access conflicts to a common bus are known per se in a general data processing environment, but these systems are rather rigid.

E.g., US Patent No. 4,467,418 decribes a multi-processor system connected to a single line arbitration bus in which arbitration takes place on the basis of variable length pulses applied to bus requesters on the arbitration bus for marking the same. The requesters draw pulses of randomly distributed durations and the requester or allocator with the longest temporisation wins the arbitration process.

Also, in the handbook, "The Motorola MC68000 Microprocessor Family: Assembly Language, Interface Design, and System Design", T.L. Harman et al., Prentice-Hall, 1985, pages 352-366, a bus master and slave arbitration is disclosed per se, whereby external bus requesting devices, such as DMA (direct memory access) circuits, are coupled to a bus, together with an MC68000 Microprocessor being a bus master. There, bus arbitration, as an alternative of asserting the so-called not-HALT signal line of the processor, avoids conflicts between the MC68000 Microprocessor and external devices, such as memories, accessing the bus are avoided by use of the MC68000's bus arbitration logic. The bus arbitration feature of the MC68000 allows another device to request use of the bus. Asserting the so-called Bus Request signal will force the processor to assert the so-called Bus Grant signal after it completes its current bus cycle. Once the requesting device is in control the so-called Bus Grant Acknowledge signal is held low and the bus is used by the device as necessary. When the operations are complete, the device negates the Bus Grant Acknowledge signal and the MC68000 resumes control of the bus. If a number of external devices can request control of the bus and each acts as master, external circuitry must be provided to determine their priority. In fact this bus access by external devices is a form of cycle stealing from the processor, the MC68000.

In an embodiment of a system according to the present invention an arbiter and master (A & M) comprises cyclic polling of the requesters by the arbiter until the pending request is found. In this way a flexible routing of service requests is achieved, and it is avoided that much of the bus capacity is wasted by processors polling all slaves,i.e. if a slave has data for a processor, it must be able to request servicing from that processor.

In a further embodiment of a system according to the present invention arbiter and master (A & M) comprises an adaptive priority scheme used for polling. In this way certain requesters can be favoured above others, or the number of polled addresses on the internal bus can be adapted to the number of bus participants which are able to make requests.

In an embodiment of a system according to the present invention the requesters have a unique arbitration identification code for identifying themselves to the arbiter. It is thus achieved that the arbiter can easily carry out a polling scheme, simply by putting arbitration identification codes on an address bus comprised in the internal bus. If a requester has a pending request and its arbitration identification code appears on the address bus, it asserts a common request acknowledge signal, which signals the request to the arbiter. In an adaptive polling scheme a a RAM-table (Random Access Memory) can be used containing arbitration identification codes of existing requesters only, the latter improving system throughput. The RAM-table can have multiple entries for certain requesters, thus controlling priority.

In a further embodiment of a system according to the present invention the identification code is at least partially determined by a board address of a board on which the requester is located, the board address being dependent on its physical location in a system slot. In this way the number and the type of boards actually connected can be changed, and the boards can be freely distributed over the available system slots. By making the address dependent on the physical location in the system slot, address collisions or manual configuration of address ranges are avoided.

In an embodiment of a system according to the present invention the base station comprises an assignment table for assigning master to masters and/or slaves, and wherein the arbitration identifying code of a requester is taken as a pointer to the assignment table for carrying out a request from a master or slave from a pointed table entry. In this way a very flexible system operation is achieved in which any arbitration scheme can be set up. The assignment table can be build up in a dual-ported RAM for easy updating by an initialising processor.

In an embodiment of a system according to the present invention the arbiter and master (A & M) comprise at least one counter terminating access of master to internal bus (IPB) after a predetermined time. In this way the internal bus can be arbitrated on the basis of variable length time slots. i.e. each master, once having gained bus mastership, may use the bus as long as it needs it up to a maximum bus allocation time, so that it is avoided that faulty masters can block the internal bus. The address of a faulty master can be stored for system controlling and monitoring Purposes. A typical value of the predetermined time is 1 msec.

The present invention will now be described, by way of example, with reference to the accompanying drawings, wherein
Fig. 1 schematically shows a radio communication system,
Fig. 2 is a blockdiagram of a radio base station for use in a radio communication system,
Fig. 3 is a processor bus architecture for use in a radio base station,
Fig. 4 shows bus arbitration situations in a processor bus architecture,
Fig. 5 shows bus data transfer cycles in a processor bus architecture,
Fig. 6 is an embodiment of a bus arbiter circuit in a processor bus architecture, and
Fig. 7 is an embodiment of a requester and bus grant circuit in a processor bus architecture.

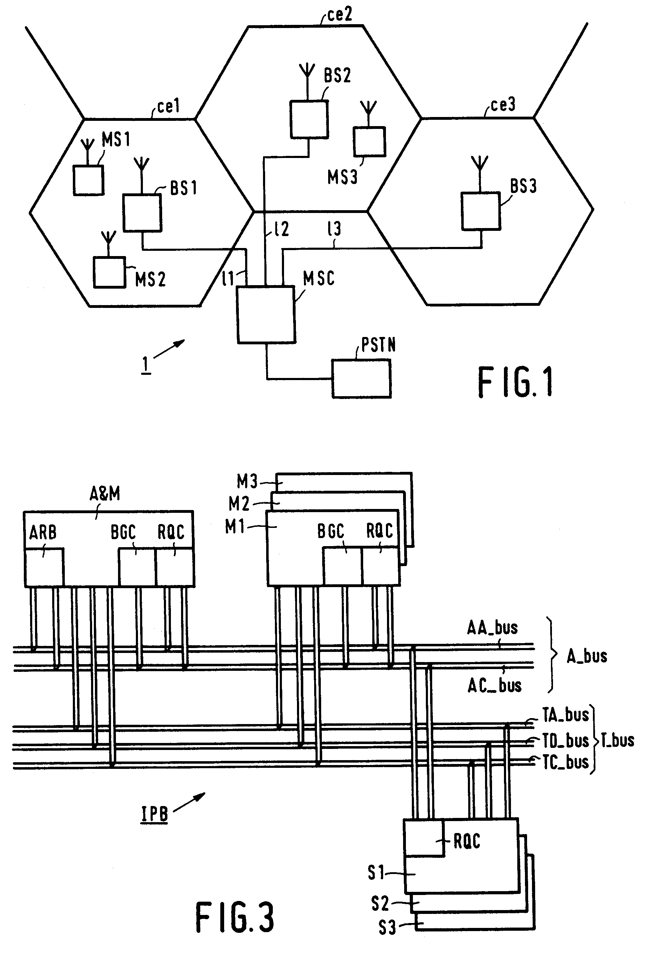

Figure 1 schematically shows a radio communication system 1, for example a cellular system like a GSM (Groupe Special Mobile) system as defined by ETSI (European Telecommunications Standards Institute), comprising in cells ce1, ce2 and ce3 radio base stations BS1, BS2 and BS3, in principle for covering radio communication in the respective cells ce1, ce2 and ce3. In order not to cause interference with neighbouring cells the radio base stations, at least in adjacent cells, transmit and receive at different frequencies, usually each radio base station BS1, BS2 and BS3 transmitting and receiving at a number of frequencies, e.g. twelve frequency channels. By applying time division multiplex, such as TDMA, in GSM with eight time slots per frequency channel, 96 logical channels are available for radio comunication per base station, then. The radio base stations BS1, BS2 and BS3 communicate with mobile radio stations MS1, MS2 and MS3, in principle with mobile radio stations being present in their respective cells, in the given example the radio base station BS1 communicating with the mobile stations MS1 and MS2, and the radio base station BS2 communicating with the mobile station MS3. When mobile radio stations are roaming through the cells ce1, ce2 and ce3 a so-called handover from one radio base station to another should occur if the quality of the communication link deteriorates, a system control function being carried out by a Mobile Switching Centre MSC, which is connected to the radio base stations BS1, BS2 and BS3 by means of landlines 11, 12 and 13 respectively. The MSC is connected to a Public Switched Telephone Network PSTN, in case of Public Mobile Radio. For Private Mobile Radio, such connection can be deferred with. Furthermore, in a GSM system, to protect the data from transmission errors on the radio path, among other operations, channel coding is applied on the logical channels before transmission and channel decoding at reception, i.e. a lot of (quasi) real time processing is required on data to be transmitted. To this end, and for other processing tasks, the radio base stations comprise a number of processors, a so-called processor pool, and a number of channel codecs, channel encoders and decoders, to be described later on. For a more detailed decription of a cellular system, e.g. GSM, referred is to said article by Reljonen, and further to the articles "An Overview of the GSM System", B.J.T. Mallinder, and "Overview of the Radio Subsystem", H. Ochsner, Conference Proceedings of the Digital Cellular Radio Conference DCRC, October 12-24, 1988, Hagen, Westfalia, FRG, pages 1a/1-1a/13, and pages 3a/1-3a/12, respectively.

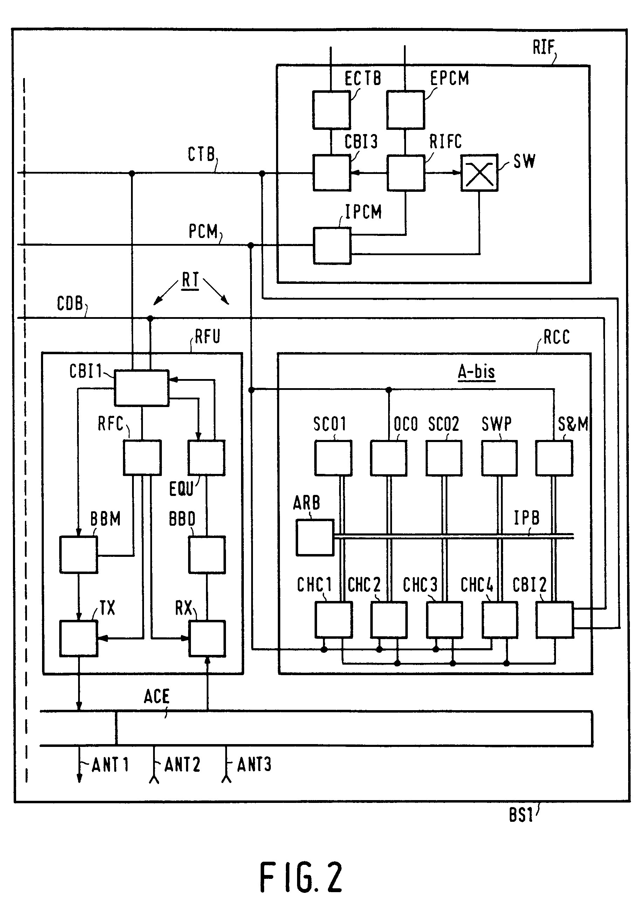

Fig. 2 is a blockdiagram of a radio base station BS1 according to the present invention, for use in the radio communication system 1. The radio base station BS1 comprises a number of radio terminals, half of a double one, radio terminal RT being shown. The radio base station BS1 may comprise twelve radio terminals in a rack of two rack mounting frames of a radio base station rack, here not further shown. The radio terminal RT comprises an RF-unit RFU and a radio codec and control unit RCC which can exchange data with each other via a cluster data bus CDB. The units RFU and RCC are coupled to a rack interface unit RIF via a cluster timing bus CTB, and the unit RCC is further coupled to the unit RIF via a PCM-link PCM of 2 Mbits/sec. The rack interface unit RIF comprises several interfaces for coupling to other radio terminals inter alia, such as an external cluster timing bus interface ECTB, and an interface for connection to external PCM-hardware EPCM, and further internal PCM-hardware IPCM coupled to a rack interface controller RIFC and a switch SW. The switch SW is coupled to further external circuitry, not shown here. The purpose of showing the above units in the rack interface unit is to show that the radio terminal RT to be described further, is connected to other hardware in the radio base station BS1 for exchanging data, and further to indicate that in a digital radio communication, like GSM, data to be transmitted or received are PCM encoded data. For mutual timing and data exchange the RF-unit RFU, the radio codec and control Unit RCC, and the rack interface unit RIF comprise a cluster bus interface CBI1, CBI2, and CBI3, respectively, coupled to the cluster timing bus CTB and to the cluster data bus CDB.

More in detail the RF-unit RFU comprises an RF-controller RFC which is coupled to the cluster bus interface CBI1. For PCM-data to be transmitted, the cluster bus interface CBI1 is coupled to a transmitter radio part TX, via a base band modulator BBM, both being controlled by the RF-controller RFC. Received encoded radio signals are fed to a base band digitizer BBD, via a receiver radio part RX, which is controlled by the RF-controller RFC. Received and digitized signals are fed to the cluster bus interface CBI1 after equalization by means of an equalizer EQU. The transmitter and receiver radio parts TX and RX are coupled to an antenna or to antennas ANT1, ANT2 and ANT3 via antenna coupling equipement ACE. For reception a plurality of antennas can be used together with a number of receiver radio parts, in order to achieve antenna diversity.

The radio codec and control unit RCC comprises a number of processors, e.g. signalling controllers SCO1 and SCO2, and an operations and maintenance controller OCO, and further a software pool SWP, and a simulator/monitor S&M, all coupled to an internal bus IPB. Further coupled to the internal bus IPB are a number of channel codecs, CHC1, CHC2, CHC3, and CHC4, the cluster bus interface CBI2, and an arbiter ARB. The internal processor bus IPB is further coupled to a second radio codec and control unit in the radio terminal RT, not further shown here. The operations and maintenance controller OCO carries out more dedicated tasks than the other processors, and is therefore coupled to the PCM-link PCM for communicating to other system parts. The simulator/monitor is also coupled to the PCM-link PCM. In GSM the latter coupling in the base station BS1 is at the GSM-defined A-bis interface level, see for further details the cited Mallinder reference, page 1a/2. Also, the channel codecs CHC1, CHC2, CHC3, and CHC4 are coupled to the PCM-link PCM. In the given example units connected to the internal bus IPB can be divided by their data transfer capabilities into two classes, masters and slaves. E.g. the processors OCO, SCO1, and SCO2 can be masters, and the channel codecs CHC1, CHC2, CHC3, and CHC4 can be slaves. Masters are able to control the internal processor bus IPB, i.e. masters can initiate a data transfer cycle, either read or write, and they can generate control signals. Only one master can be active at a time, and then is an active master. Masters which are not currently active are potential masters. Slaves are passive systems, which can only be active when a master accesses them. A task of the arbiter ARB is to give bus control to one of the potential masters, every master being able to request bus control of the internal bus IPB. Slaves cannot directly request bus control, but they may issue a service request to the arbiter. Such slaves are requesting slaves. Masters and requesting slaves are requesters, and requesters which are currently issuing a request are active requesters. If there is no active master, the internal bus is idle. Though the arbiter ARB is shown as a separate unit in figure 2, the arbiter ARB may be integrated with a master, which then can perform both arbiter and master functions.

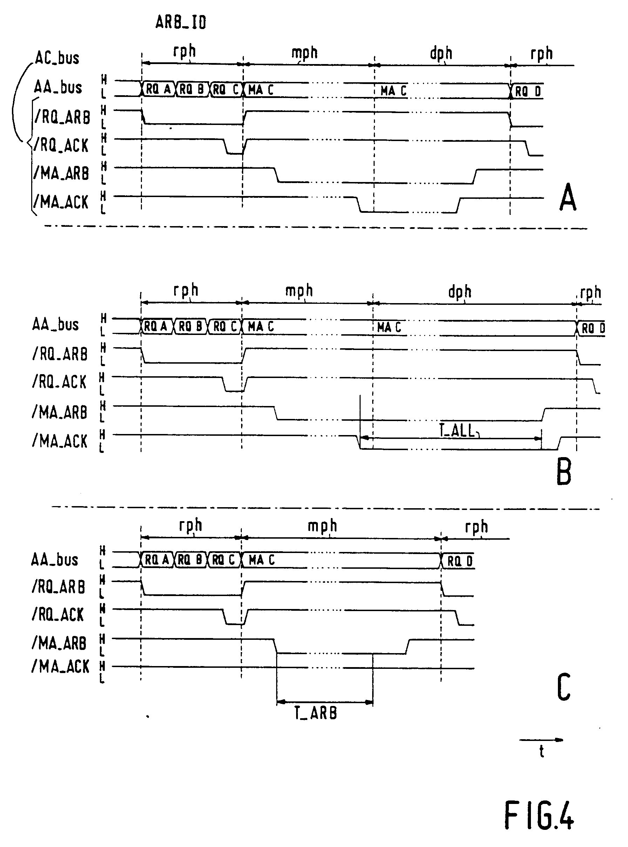

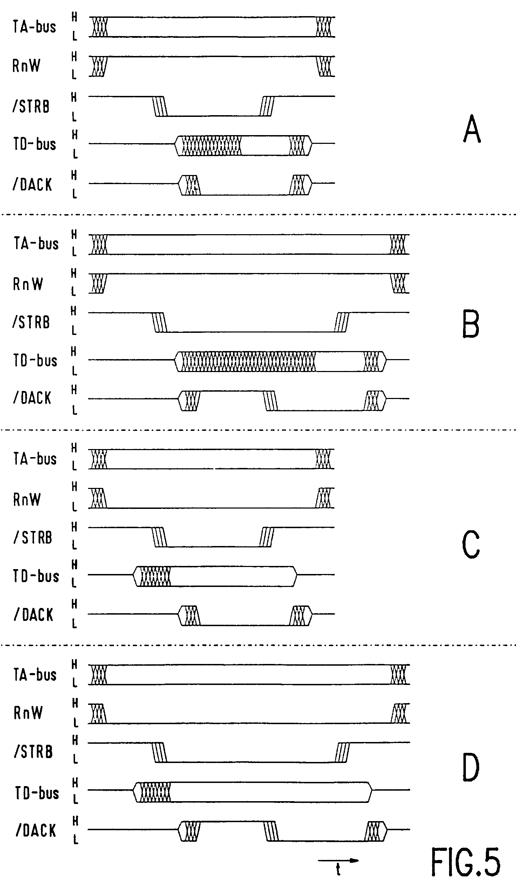

Fig. 3 shows a detailed processor bus architecture for the internal bus IPB, in the radio base station BS1. With the help of this more detailed architecture, and with the help of figures 4 and 5, the functioning of the internal bus IPB as an arbitration bus will be described. Shown is an arbiter and master A&M, an number of masters M1, M2, and M3, and a number of requesting slaves S1, S2, and S3, all coupled to the internal processor bus IPB. The internal bus IPB can logically and physically be divided into two independent functions, arbitration and data transfer. To this end the bus IPB comprises an arbitration bus A_bus having an arbitration address bus AA_bus, and an arbitration control bus AC_bus, and a transfer bus T_bus having an transfer address bus TA_bus, a transfer data bus TD_bus, and a transfer control bus TC_bus. The bus widths may be 8 bits for the AA_bus, 4 bits for the AC_bus, 13 bits for the TA_bus 8 bits for the TD_bus and 3 bits for the TC_bus. The arbiter and master A&M comprises an arbiter circuit ARB coupled to the AA_bus and to the AC_bus, the arbiter and master A&M, and the masters M1, M2, and M3 comprise a bus grant circuit BGC coupled to the AC_bus, and the arbiter and master A&M, the masters M1, M2, and M3, and the slaves S1, S2, and S3 comprise a requester circuit RQC coupled to the AA_bus and to the AC_bus. Furthermore, the arbiter and master A&M, the masters M1, M2, and M3, and the slaves S1, S2, and S3 are coupled to the busses TA_bus, TD_bus, and TC_bus. The function of the arbitration is to share the internal bus IPB between the potential masters and to route requests from slaves to masters. While the bus is idle, the arbiter performs cyclic tests for requests from masters or slaves. If a master M1, M2, or M3 has issued a request, it gets alarmed as soon as the arbiter ARB allocates the internal bus IPB to it. If a slave S1, S2, or S3 has issued a request, a master M1, M2, or M3 assigned to that slave gets alarmed. After a master has been alarmed, it may use the bus until it releases it. However, after a predetermined time or time-out, the arbiter ARB will force a faulty bus master to release the internal bus IPB. The arbitration is accomodated via the arbitration bus A_bus. Data transfer is accomodated via the transfer bus T_bus. A handshaking mechanism allows for flexible response times, i.e. the bus is completely asynchronous.

In order to describe the arbitration mechanism, fig. 4 shows bus arbitration situations in a processor bus architecture according to figure 3, as a function of time t. Shown are three arbitration situations, in fig. 4A, fig. 4B, and fig. 4C, respectively, fig. 4A showing a regular arbitration situation, fig. 4B showing an allocation time-out situation, and fig. 4C showing an arbitration time-out situation. In the arbitration situations the arbiter address bus AA_bus is shown, and the arbiter control bus AC_bus, comprising four control signals, /RQ_ARB, /RQ_ACK, /MA_ARB, and /MA_ACK. The AA_bus is used to transfer requester and master addresses and is constantly driven by the arbiter, the /RQ_ARB signal is used to signal a requester arbitration phase rph and is constantly driven by the arbiter, the /RQ_ACK signal is used by an active requester to signal its request to the arbiter, if it recognizes its own arbitration identification code during the requester arbitration phase rph and is driven by an active requester, the /MA_ARB signal is used to qualify a master arbitration identification code during a master arbitration phase mph and a data transfer phase dph and is constantly driven by the arbiter, and the /MA_ACK signal is used by a master to signal that it is ready to take over bus control if it recognizes its own arbitration identification code during the master arbitration phase mph and is driven by a master.

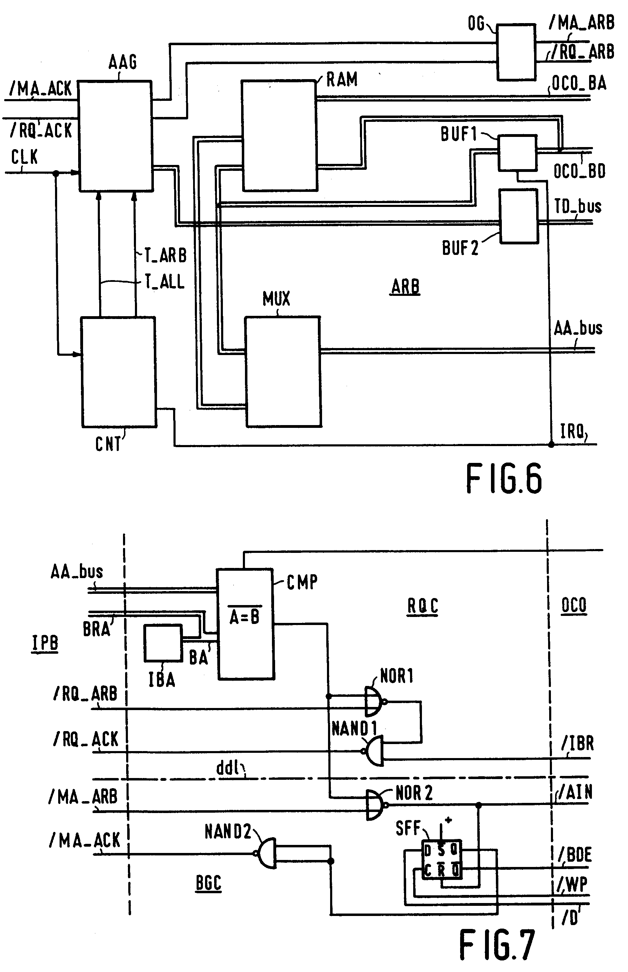

In the requester arbitration phases rph the requesters are polled by the arbiter ARB until a pending request is found, in the master arbitration phases mph the master, which is assigned to the requester having the request, will be activated, and in the data transfer phases dph, the internal bus is assigned to one master and data can be transferred. During the requester arbitration and the master arbitration phases rph and mph, the transfer bus T_bus is idle. The arbitration logic consists of the arbiter circuit ARB, the requester circuits RQC, the bus grant circuits BGC and the arbitration bus A_bus comprising the busses AA_bus and AC_bus. The arbiter circuit ARB, to be described in more detail in fig. 6, has to be configured by a processor, e.g. the processor OCO as shown in fig. 2. For isolating faulty bus masters from the bus inter alia, the arbitration address lines are separated from the transfer bus address lines, because they have to be kept stable during the data transfer phase. Furthermore, all requesters have a unique eight bit arbitration identification code, which is derived from the physical location of the board (slot number) and a relative board number, i.e. the board address.

During the requester arbitration phases rph, the signal /RQ_ARB is active, indicated by L(ow). In the give example there are four requesters, RQ A, RQ B, RQ C, and RQ D. To search for an active requester, the arbiter ARB puts arbiter identification codes ARB_ID onto the AA_bus. If a requester RQ C has a pending request and its ARB_ID appears on the AA_bus, it asserts a common request acknowledge signal /RQ_ACK, which signals the request to the arbiter ARB. Otherwise, if no requester asserts /RQ_ACK, the arbiter ARB will drive a next ARB_ID value onto the AA_bus until /RQ_ACK is asserted by a requester RQ C. In the given example RQ C acknowledges a request. In a practical situation only a fraction of possible requesters, i.e. ARB_IDs might be used. A polling scheme polling all possible requesters would not be very efficient, then. In such practical situations, according to the present invention, a more flexible polling scheme is used. Instead of applying a simple solution in which arbiter addresses are generated under control of a fixed counter, the address lines of the arbiter are connected to the data outputs of a Random Access Memory of which the address input lines are driven by a programmable counter. In this way the number of polled arbitration addresses can be matched exactly to the number of bus participants that are able to issue requests and/or certain bus participants can be favoured or prioritized in that their addresses more often appear on the arbitration address bus AA_bus per arbitration cycle. Also, the sequence of putting arbitration addresses onto the AA_bus can be chosen such that the bus is free of glitches that could occur in a random choice of addresses. Such glitches could cause bus participants not currently being addressed, to temporarily occupy an arbiter common request line, and thus slow down the arbitration process. E.g. an address sequence in accordance to a so-called Gray code can be chosen.

In the master arbitration phases mph, the current ARB_ID, the ID of an active requester, is taken as a pointer to an assignement table (further to be described in relation to fig. 6), which contains assignments between masters and slaves. The assignment table is initiated by the processor OCO, shown in fig. 2, which also controls the arbiter circuit ARB. For a slave requester, a table entry of the assignment table is the ARB_ID of its master, and for a master requester the entry is the master's own ARB_ID. The table entry, or target master ARB_ID, is the put onto the AA_bus and validated by a strobe signal, the /MA_ARB signal. The bus grant circuits BGC of the masters M1, M2, and M3 then compare the master's ARB_ID on the arbitration address bus AA_bus with their own ARB_ID. If the IDs are identical for one BGC, this BGC generates an interrupt to its master. The master then has to activate a signal arbitration acknowledge, the signal /MA_ACK to inform the arbiter circuit ARB, that the master is ready to take over bus control. The timing of this signal is supervised by the arbiter ARB. If the master doesn't respond in time, the arbiter will at once return to the requester arbitration phase rph, and start a new arbitration cycle, such a situation being shown in fig. 4C, the arbitration time-out situation. If the master responds in time, it will become the active bus master. In fig. 4A and in fig. 4B requester RQ C, i.e. master C, MA C, gets bus control, whereas in fig. 4C master MA C doesn't respond in time, and thus doesn't get bus control. The period within which the master has to respond, an arbitration time-out period T_ARB as shown in fig. 4C, e.g. is 16 µsec.

In the data transfer phases dph, the active master has complete control over the data transfer bus T_bus. It may use the bus as long as it needs it, but no longer than an allocation time-out period T_ALL of e.g. 1 msec, fig. 4B showing a faulty bus master deactivating the /MA_ACK signal too late, i.e. beyond T_ALL. To recognize the source of the bus request, the master may read a register in the ARB circuit, to be shown is fig. 6, via the internal bus IPB, which contains the ARB_ID of the requester which has initiated the arbitration. The latter is useful, even if the master itself has requested the bus, because at the same time a slave, which is assigned to that master, might have issued a request. When the master has finished its tranfers, it releases the bus by deactivating the /MA_ACK signal, the bus then being idle again. The arbiter then returns to the requester arbitration phase rph and puts a next ARB_ID onto the AA_bus indicated with RQ D.

In order to describe the data transfer mechanism on the transfer bus T_bus, fig. 5 shows bus data transfer cycles in a processor bus architecture as described in figure 3. The data transfer bus T_bus is an asynchronous bus with handshaking capabilities, having an 8 bit wide data bus TD_bus, and a 13 bit wide address bus TA_bus. The four most significant address bus bits determine the physical location of the board (the so-called slot number) to be addressed, and 9 bits can be decoded on every board, i.e. an address space of 512 bytes is available per board. Although the data transfer bus is defined to be asynchronous, it is internally controlled by a clocked machine operating with a clock frequency of 16 MHz. Thus, one data transfer takes 500 nsec at minimum, or 8 clock cycles, the maximum bus bandwidth being 2 MBytes/sec. The data transfer bus has similarity with the MC68000 bus, but is modified for the purpose of the present invention.

The data transfer bus T_bus is controlled by the active bus master, the bus being idle if there is no active master. The active master is defined by the address on the AA_bus and by the master arbitration signal /MA_ARB. The active master drives the address bus TA_bus, the control signals, and, during write cycles, the data bus TD_bus. Its bus drivers, not shown here, are enabled directly by a correct ARB_ID and an active /MA_ARB signal, except when the arbiter ARB is held in its reset state by its controlling processor, e.g. the processor OCO. In the latter case, the arbiter does not start any arbitration phases, and the OCO may use the bus. Fig. 5 shows various data transfer cycles, fig. 5A showing a read cycle without wait, fig. 5B showing a read cycle with wait, fig. 5C showing a write cycle without wait, and fig. 5D showing a write cycle with wait. The control bus TC_bus signals are a read/not write signal RnW, and a strobe signal /STRB, driven by the active master, and an acknowledge signal /DACK, driven by the addressed slave. The transfer address bus TA_bus is driven by the active master, and the transfer data bus TD_bus is either driven by the active master or by the addressed slave.

During read or write cycles the master M1, M2, or M3, puts data on the TD_bus in the presence of a RnW signal, and, with some delay, activates the strobe signal /STRB. In case of a write cycle, it also drives the data lines. The slave circuitry RQC drives /DACK, and, indicates to the master that a bus cycle can be finished and is used to insert wait states if data is not ready. A bus cycle will not terminate until /DACK is asserted, unless the master has a bus time-out supervision. After the master recognizes an asserted /DACK, it deasserts /STRB and, in case of a read cycle, samples the data. The slave then has to deassert /DACK. The bus cycle ends as the master changes the address and, in case of a write cycle, removes the data from the bus.

Fig. 6 is an embodiment of a bus arbiter circuit ARB in a processor bus architecture according to the present invention comprising an arbitration address generator AAG for generating arbitration addresses on the basis of a number of input signal. The generator AAG is coupled to a counter circuit CNT for supplying the control signals T_ARB, the arbitration time-out signal, and T_ALL, the allocation time-out signal, to the generator AAG under clock control of an external clock CLK, e.g. 8 MHz. Further control signals for the generator AAG are /MA_ACK and /RQ_ACK, whereas the generator AAG generates the control signals /MA_ARB and /RQ_ARB, as have been described before, the signals /MA_ARB and /RQ_ARB being supplied to an output gate OG, which can be gated by an enable signal derived from a predetermined slot location (not shown). The ARB circuit further comprises a multiplexer MUX, controlled by the signal /RQ_ARB, for multiplexing addresses generated by the address generator AAG and addresses from a dual ported Random Access Memory RAM, i.e. switches between requester and master addresses, and further a buffer BUF1 for storing the arbitration IDs of faulty bus masters, i.e. bus masters exceeding the allocation time-out T_ALL, and a buffer BUF2 coupled to the transfer data bus TD_bus for supplying requester addresses. The counter CNT is started as soon as the signal /MA_ARB becomes active. The dual ported RAM stores the assignment table in which masters and slaves are assigned to each other, the assignment table being initialized by the processor OCO. To this end the dual ported RAM has an address bus OCO_BA and a data bus OCO_BD connected to the processor OCO, shown in fig. 2. In case of an allocation time-out an interrupt IRQ is generated for the processor OCO, which can then access the buffer BUF1 for getting the address of the faulty bus master. For flexible polling the arbiter address lines are coupled to the data output lines of a RAM, of which the address input lines are driven by a programmable counter.

Fig. 7 is an embodiment of a requester circuit RQC and a bus grant circuit BGC in a processor bus architecture according to the present invention, above and below a dotted-dashed line ddl respectively. The requester circuit RQC comprises a comparator for comparing actual arbitration addresses on the arbitration address bus AA_bus with an address BA, containing an individual board address IBA and an on board requester address BRA. If the addresses match the acknowledge signal /RQ_ACK is driven low. If the signal /RQ_ARB is low, the arbiter is polling. The signals to the left of the left dashed vertical line are internal bus IPB signals, and the signals to the right of the right dashed vertical line are ARB controller signals. The latter signals comprise an internal bus request signal /IBR. The requester circuit RQC further comprises a NOR-gate NOR1, and a NAND-gate NAND1 for control signal purposes, as described.

The bus grant circuit BGC comprises an SR-flipflop SFF, a NOR-gate NOR2, and a NAND-gate NAND2. Input signals for the bus grant circuit are /MA_ARB at IPB side, and a write pulse /WP, a data bit signal /D at OCO side. Output signals are the /MA_ACK signal at IPB side, and the signals bus driver enable /BDE and acknowledge interrupt /AIN at OCO side. For the functioning of requester RQC and bus grant, see the description as given before.

## Claims

1. A radio communication system (1) comprising at least one radio base station (BS1) for communicating with a plurality of mobile radio stations (MS1, MS2, MS3), the base station (BS1) comprising control and signal processing means, the control and signal processing means comprising master (M1, M2, M3) and slave units (S1, S2, S3) for carrying out master and slave control and signal processing functions, the base station (BS1) comprising an internal bus (IPB) coupled to the master and slave units,
characterized in that master units and slave units can be requesters, and master units are assignable to requesters, and by an arbiter unit (ARB) coupled to the internal bus (IPB) for arbitrating access to the internal bus by the master units and the slave units, for examining requesters for having pending requests, for activating a master unit (M1, M2, M3) assigned to the requester having the pending request and for servicing the request.

2. A radio communication system as claimed in claim 1, wherein an arbiter and aster (A & M) comprises cyclic polling of the requesters by the arbiter until the pending request is found.

3. A radio communication system as claimed in claim 2, wherein the arbiter and master (A & M) comprises an adaptive priority scheme used for polling.

4. A radio communication system as claimed in any one of the claims 1 to 3, wherein the requesters have a unique arbitration identification code (ARB_ID) for identifying themselves to the arbiter unit (ARB).

5. A radio communication system as claimed in claim 4, wherein the identification code (BA) is at least partially determined by a board address (IBA) of a board on which the requester is located, the board address (IBA) being dependent on its physical location in a system slot.

6. A radio communication system as claimed in claims 4 or 5, wherein the base station (BS1) comprises an assignment table (RAM) for assigning a master (M1, M2, M3) to master units (M1, M2, M3) and/or slave units (S1, S2, S3), and wherein the arbitration identifying code (ARB_ID) of a requester is taken as a pointer to the assignment table (RAM) for carrying out a request from a master unit (M1, M2, M3) or slave unit (S1, S2, S3) from a pointed table entry.

7. A radio communication system as claimed in any one of the preceding claims, wherein the arbiter and master (A & M) comprises at least one counter terminating access of master to internal bus (IPB) after a predetermined time (T_ALL).

8. A radio communication system as claimed in any one of the preceding claims, wherein the internal bus (IPB) is a parallel bus comprising an arbitration bus (A_bus) and a transfer bus (T_bus).

9. A radio base station (BS1) for use in a cellular radio communication system (1), which base station (BS1) comprises control and signal processing means, the control and signal processing means comprise master (M1, M2, M3)and slave (S1, S2, S3) units for carrying out master and slave control and signal processing functions, in that the base station (BS1) comprises and internal bus (IPB) coupled to the master (M1, M2, M3) and slave (S1, S2, S3) units, characterized in that master units and slave units can be requesters, and master units are assignable to requesters, and by an arbiter unit (ARB) coupled to the internal bus (IPB) for arbitrating access to the internal bus by the master units and the slave units, for examining requesters for having pending requests, for activating a master unit (M1, M2, M3) assigned to the requester having the pending request and for servicing the request.

## Patentansprüche

1. Radio-Kommunikationssystem (1), welches wenigstens eine Radio-Basisstation (BS1) zum Kommunizieren mit einer Mehrzahl mobiler Radiostationen (MS1, MS2, MS3) umfaßt, wobei die Basisstation (BS1) eine Steuerungs- und Signalverarbeitungseinrichtung umfaßt,
die Hauptrechnereinheiten (M1, M2, M3) und Nebenrechnereinheiten (S1, S2, S3) aufweist, um Haupt- und Neben-Signalverarbeitungsfunktionen auszuführen, wobei die Basisstation (BS1) ferner einen internen Bus (IPB) umfaßt, welcher mit den Haupt- und Neben-Rechnereinheiten verbunden ist, dadurch gekennzeichnet, daß die Hauptrechnereinheiten und die Nebenrechnereinheiten Anforderungen stellen können, daß die Hauptrechnereinheiten den die Anforderungen stellenden Einheiten zuordnenbar sind, und daß eine Zuteilereinheit (ARB) mit dem internen Bus (IPB) verbunden ist, um den Zugriff der Hauptrechnereinheiten und der Nebenrechnereinheiten auf den internen Bus zuzuteilen und um die die Anforderungen stellenden Einheiten abzufragen, ob diese unbearbeitete Anforderungen aufweisen, um eine Hauptrechnereinheit (M1, M2, M3) zu aktivieren, welche der die Anforderung stellenden Einheit zugeordnet ist, welche die unbearbeitete Anforderung aufweist, und um die Anforderung abzuwickeln.

2. Radio-Kommunikationssystem nach Anspruch 1,
bei welchem eine Zuteileinheit und Hauptrechnereinheit (A & M) das zyklische Abfragen der die Anforderung stellenden Einheit durch Zuteileinheit umfaßt, bis die unbearbeitete Anforderung aufgefunden ist.

3. Radio-Kommunikationssystem nach Anspruch 2,
bei welchem die Zuteileinheit und Hauptrechnereinheit (A & M) ein angepaßtes Prioritätsschema umfaßt, welches zum Abfragen verwendet wird.

4. Radio-Kommunikationssystem
nach einem der Ansprüche 1 bis 3,
bei welchem die die Anforderung stellende Einheit einen einzigen Zuteiler-Identifizierungscode (ARB_ID) aufweist, um sich der Zuteilereinheit (ARB) auszuweisen.

5. Radio-Kommunikationssystem nach Anspruch 4,
bei welchem der Identifizierungscode (BA) wenigstens teilweise durch eine Baugruppenadresse (IBA) einer Baugruppe festgelegt ist, auf welcher die die Anforderung stellende Einheit angeordnet ist, und die Baugruppenadresse (IBA) von deren physikalischem Ort in einem Systemschlitz abhängt.

6. Radio-Kommunikationssystem
nach einem der Ansprüche 4 oder 5,
bei welchem die Basisstation (BS1) eine Zuordnungstabelle (RAM) zum Zuordnen eines Hauptrechners (M1, M2, M3) zu Hauptrechnereinheiten (M1, M2, M3) und/oder Nebenrechnereinheiten (S1, S2, S3) umfaßt, und bei welchem der Zuteiler-Identifizierungscode (ARB_ID) einer die Anforderung stellende Einheit als Zeiger für die Zuordnungstabelle (RAM) verwendet wird,
um eine Anforderung einer Hauptrechnereinheit (M1, M2, M3) oder einer Nebenrechnereinheit (S1, S2, S3) von einem Tabelleneintrag auszuführen, auf welchen der Zeiger deutet.

7. Radio-Kommunikationssystem
nach einem der vorstehenden Ansprüche,
bei welchem die Zuteileinheit und Hauptrechnereinheit (A & M) wenigstens einen Zähler umfaßt, welcher den Zugriff des Hauptrechners auf den internen Bus (IPB) nach einer vorbestimmten Zeit (T_ALL) beendet.

8. Radio-Kommunikationssystem
nach einem der vorstehenden Ansprüche,
bei welchem der interne Bus (IPB) ein paralleler Bus ist, welcher einen Zuteilerbus (A_Bus) und einen Übertragungsbus (T_Bus) umfaßt.

9. Radio-Basisstation (BS1) zum Verwenden in einem zellularen Radio-Kommunikationssystem (1), bei welchem die Basisstation (BS1) eine Steuerungs- und Signalverarbeitungseinrichtung umfaßt und die Steuerungs- und Signalverarbeitungseinrichtung Hauptrechnereinheiten (M1, M2, M3) und Nebenrechnereinheiten (S1, S2, S3) umfaßt, um Haupt- und Nebenrechnersteuerungs- und Signalverarbeitungsfunktionen auszuführen, wobei die Basisstation (BS1) einen internen Bus (IPB) umfaßt, welcher mit den Hauptrechnereinheiten (M1, M2, M3) und den Nebenrechnereinheiten (S1, S2, S3) verbunden ist, dadurch gekennzeichnet, daß die Hauptrechnereinheiten und die Nebenrechnereinheiten Anforderungen stellende Einheiten sein können, daß die Hauptrechnereinheiten den die Anforderungen stellenden Einheiten zuordnenbar sind, und daß eine Zuteilereinheit (ARB) mit dem internen Bus (IPB) verbunden ist, um den Zugriff der Hauptrechnereinheiten und der Nebenrechnereinheiten auf den internen Bus zuzuteilen und um die die Anforderung stellende Einheit abzufragen, ob diese unbearbeitete Anforderungen aufweisen, um eine Hauptrechnereinheit (M1, M2, M3) zu aktivieren, welche der die Anforderung stellenden Einheit zugeordnet ist, welche die unbearbeitete Anforderung aufweist, und um die Anforderung abzuwickeln.

## Revendications

1. Système (1) de radiocommunications comprenant au moins une station de base radio (BS1) destinée à communiquer avec une pluralité de stations radio mobiles (MS1, MS2, MS3), la station de base (BS1) comprenant des moyens de commande et de traitement des signaux, les moyens de commande et de traitement des signaux comprenant des unités maîtresses (M1, M2, M3) et esclaves (S1, S2, S3) pour exécuter des fonctions maîtresses et esclaves de commande et de traitement des signaux, la station de base (BS1) comprenant un bus interne (IPB) reliée aux unités maîtresses et esclaves,
caractérisé en ce que les unités maîtresses et les unités esclaves peuvent être des demandeurs, et en ce que des unités maîtresses peuvent être affectées à des demandeurs, et par une unité d'arbitrage (ARB) reliée au bus interne (IPB) pour arbitrer des accès des unités maîtresses et des unités esclaves au bus interne, pour examiner si des demandeurs ont des demandes en attente, pour activer une unité maîtresse (M1, M2, M3) affectée au demandeur ayant la demande en attente, et pour prendre en charge la demande.

2. Système de radiocommunications suivant la revendication 1, dans lequel un système arbitre et maître (A & M) comprend une interrogation cyclique des demandeurs par l'arbitre jusqu'à ce que la demande en attente soit trouvée.

3. Système de radiocommunications suivant la revendication 2, dans lequel le système arbitre et maître (A & M) comprend une technique de priorité adaptative utilisée pour l'interrogation.

4. Système de radiocommunications suivant l'une quelconque des revendications 1 à 3, dans lequel les demandeurs ont un code d'identification d'arbitrage unique (ARB_ID) leur permettant de s'identifier à l'unité d'arbitrage (ARB).

5. Système de radiocommunications suivant la revendication 4, dans lequel le code d'identification (BA) est au moins partiellement déterminé par une adresse de carte (IBA) d'une carte sur laquelle se trouve le demandeur, l'adresse de carte (IBA) dépendant de sa position physique dans une position d'un système.

6. Système de radiocommunications suivant les revendications 4 ou 5, dans lequel la station de base (BS1) comprend une table d'affectation (RAM) destinée à affecter un maître (M1, M2, M3) à des unités maîtresses (M1, M2, M3) et/ou à des unités esclaves (S1, S2, S3), et dans lequel le code d'identification d'arbitrage (ARB_ID) d'un demandeur est pris en tant qu'un pointeur vers la table d'affectation (RAM) pour exécuter une demande émanant d'une unité maîtresse (M1, M2, M3) ou d'une unité esclave (S1, S2, S3) à partir d'une entrée pointée dans la table.

7. Système de radiocommunications suivant l'une quelconque des revendications précédentes, dans lequel le système arbitre et maître (A & M) comprend au moins un compteur interrompant l'accès de l'unité maîtresse au bus interne (IPB) après un temps déterminé à l'avance (T_ALL).

8. Système de radiocommunications suivant l'une quelconque des revendications précédentes, dans lequel le bus interne (IPB) est un bus parallèle comprenant un bus d'arbitrage (A_bus) et un bus de transfert (T_bus).

9. Station de base radio (BS1) destinée à être utilisée dans un système de radiocommunications cellulaire (1), laquelle station de base (BS1) comprend des moyens de commande et de traitement des signaux, les moyens de commande et de traitement des signaux comprenant des unités maîtresses (M1, M2, M3) et esclaves (S1, S2, S3) pour exécuter des fonctions maîtresses et esclaves de commande et de traitement des signaux, la station de base (BS1) comprenant un bus interne (IPB) relié aux unités maîtresses (M1, M2, M3) et esclaves (S1, S2, S3), caractérisé en ce que les unités maîtresses et les unités esclaves peuvent être des demandeurs, et en ce que des unités maîtresses peuvent être affectées à des demandeurs, et par une unité d'arbitrage (ARB) reliée au bus interne (IPB) pour arbitrer des accès des unités maîtresses et des unités esclaves au bus interne, pour examiner si des demandeurs ont des demandes en attente, pour activer une unité maîtresse (M1, M2, M3) affectée au demandeur ayant la demande en attente, et pour prendre en charge la demande.
